# EUROPEAN PATENT SPECIFICATION

(11) **EP 4 563 000 B1**
(45) Date of publication and mention of the grant of the patent: **02.09.2026**
(21) Application number: 23212670.6
(22) Date of filing: 28.11.2023
(51) Int. Cl.: A21C 3/08, A21C 9/06, A21C 9/08

(54) **SYSTEM AND METHOD FOR AUTOMATED PRODUCTION OF TWISTED BAKERY BUNS**
SYSTEM UND VERFAHREN ZUR AUTOMATISIERTEN HERSTELLUNG VON GEDREHTEN BÄCKEREIEN
SYSTÈME ET PROCÉDÉ DE PRODUCTION AUTOMATISÉE DE PETITS PAINS DE BOULANGERIE TORSADÉS

(43) Date of publication of application: 04.06.2025
(73) Proprietor: Danmatic, automated Bakery Systems A/S, 8800 Viborg (DK)
(72) Inventor: Walther, Per, 8800 Viborg (DK); Koch Sørensen, Michael, 8800 Viborg (DK)
(74) Representative: Patrade A/S

(56) References cited:
- EP-B1- 1 255 441
- DE-B4- 102018 003 809
- DE-C2- 4 430 173
- US-A1- 2017 071 217
- US-B2- 9 936 709

## Description

### FIELD OF THE INVENTION

The present invention relates to a system for automated production of bakery, such as twisted buns, said system comprising:
- a robot arm adapted for gripping and twisting the dough strips,
- a winding tool for holding and/or winding the dough strips, said winding tool comprising:
   - at least two protrusions, preferably three protrusions, such as rods, for holding the dough, said protrusions being positioned in an end of the winding tool,
   wherein the winding tool preferably is being adapted for:
   - rotating around the center axis of the tool, preferably in an at least substantial vertical line, while rolling up the dough strip, and
   - releasing the dough from the winding tool, when the dough strip is rolled up on the tool,
- a conveyor belt for transporting the dough strips to and from the winding tool and the robot arm, said conveyor belt positioned below the winding tool and the robot arm.

Furthermore, the invention relates to a method for automated production of twisted bakery buns, wherein said method comprises the steps of:
- transporting the at least one dough strip at a conveyor belt,
- winding by a winding tool and a robot arm the at least one dough strip, wherein the winding process comprises:
   - grasping a first end of the dough strip by a winding tool.
   - lifting the first end of the grasped dough strip by a winding tool,
   - grasping by the robot arm the opposite second end of the dough strip,
   - lifting the entire dough strip up from the conveyor belt by the winding tool and the robot arm,
   - rotating the winding tool around an at least substantially vertical axis,
   - twisting the dough strips by the robot arm, preferably simultaneously with rotating the dough strip,
   - winding the second end over and/or under the dough,
- stopping the rotation of the winding tool,
- releasing the winded dough strip from the winding tool,
- ensuring the winded dough strip lands on a conveyor belt,
- putting the second end of the dough strip into the center of the winded dough or under the winded dough by the robot arm, preferably simultaneously with the winded dough being transported on the conveyor belt,
wherein the steps of the method can be executed in any order and/or executed simultaneously.

### BACKGROUND OF THE INVENTION

Within the bakery industry the automatization of bakery processes is in progress. More and more of the simple bakery products and processes have already been made automated, and today, numerous solutions of automated bakery processes and systems to perform the process are available. US 9 936 709 B2, US 2017/071217 A1 and EP 1 255 441 B1 are disclosing dough processing systems.

However, when it comes to more complicated and specialized bakery product and processes, the automatization is not as competently developed, and the bakery industry calls for more optimal and highly effective automated processes.

Such a process could be the process of producing twisted bakery buns, which today is handled manually, as the production of twisted bakery buns requires many different steps and thereby also requires a suitable system suitable for performing the complex process.

The manually handling is inefficient since the manual process is both very time consuming and expensive.

Hence, an improved automated process and a system for performing the automated process of producing a twisted bakery bun, preferably an efficient and reliable process and system, would be advantageous, and in particular a more resistant, mechanically strong, economical, sustainable system with longevity would be advantageous.

### OBJECT OF THE INVENTION

It is an object of the present invention to provide an alternative to the prior art.

In particular, it may be seen as an object of the present invention to provide an automated process and a system for performing the automated process that solves the above-mentioned problems.

### DESCRIPTION OF THE INVENTION

Thus, the above described object and several other objects are intended to be obtained in a first aspect of the invention by providing a system for automated production of bakery, such as twisted buns, said system comprising:
- a robot arm adapted for gripping and twisting the dough strips,
- a winding tool for holding and/or winding the dough strips, said winding tool comprising:
   - at least two protrusions, preferably three protrusions, such as rods, for holding the dough, said protrusions being positioned in an end of the winding tool,
   wherein the winding tool preferably is being adapted for:
   - rotating around the center axis of the tool, preferably in an at least substantial vertical line, while rolling up the dough strip, and
   - releasing the dough from the winding tool, when the dough strip is rolled up on the tool,
- a conveyor belt for transporting the dough strips to and from the winding tool and the robot arm, said conveyor belt positioned below the winding tool and the robot arm.

The invention is particularly, but not exclusively, advantageous for providing a system suitable for performing the complicated processes of making twisted bakery buns in an automated process. Since more or less no manual workforce is required when running the system, the system provides the opportunity of obtaining an optimal and highly effective automated processes.

Instead of having a manual process being inefficient, time consuming and expensive, this system obtains the possibility of obtaining an improved automated process.

The system is furthermore efficient and reliable, mechanically strong, economical, sustainable and with longevity.

Within the invention, "twisted buns" may be understood as "twists", "bakery twists", "twisted bakery buns", "bakery twisted buns" or the like.

Also, it should be understood that the filling of the twisted buns should not be seen as limited to the invention. Examples of fillings can be cinnamon, cardamom, remonce, jam, chocolate spread, brown sugar, etc.

Within the invention, the "winding tool" may both rotate around its own center axis and furthermore be able to be angles from the attachment point to the frame.

In one embodiment of the invention, the system further comprises:
- a disperse belt for dispersing associated dough strips,
wherein the disperse belt and conveyor belt can be two individual belts or one coherent belt.

The embodiment is particularly, but not exclusively, advantageous for providing the possibility of producing the strips of doughs to be used for making twisted bakery buns in continuation of the same system as where the strips are being made into to twisted buns.

Within the invention, the disperse belt may be or may comprise a separate apparatus/machine/device or the like. The disperse belt may comprise several conveyor belts - one for each strip of dough - moving the dough strips away each other.

The distance between these strips gives the disperse/spread of the dough.

In one embodiment of the invention, the system further comprises:
- a first cutter, such as a cutting wheel, for cutting up dough into dough strips,
   wherein the first cutter is adapted to cut the dough in a lengthwise direction, and/or
- a second cutter, such as a guillotine cutter, for cutting a dough strip into a plurality of smaller dough strips,
   wherein the second cutter is adapted to cut the dough in a crosswise direction.

The embodiment is particularly, but not exclusively, advantageous for providing even further automated processes. The cutting processes are within the system made exact and precisely in a quick and easy automated manner.

In one embodiment of the invention, the system further comprises at least one frame, wherein:
- the at least one winding tool is suspended from said frame, preferably in an at least substantially vertical direction, and/or
- the at least one robot arm us suspended from said frame, preferably in an at least substantially vertical direction.

The embodiment is particularly, but not exclusively, advantageous for providing a system, wherein the frame potentially comprises both the winding tool and the robot arm, and thereby providing a comprised system which is easy to handle, easy to transport, easy to service, etc.

In one embodiment of the invention the system further comprises:
- a safeguard for protecting against contact with the robot arm, such as a barrier.

The embodiment is particularly, but not exclusively, advantageous for providing a safe and secure system, wherein no worker potentially gets hurt.

According to the present invention, a first row of a plurality of winding tools and a first row of a plurality of robot arms are positioned at least substantially parallel to a second row of a plurality of winding tools and a second row of a plurality of robot arms.

The invention is particularly, but not exclusively, advantageous for optimizing the possibility of producing as many bakery products as possible simultaneously.

According to the present invention,
the first row of winding tools and the first row of robot arms are positioned displaced to the second row of winding tools and the second row of robot arms, and
wherein the displaced position of rows is adapted for allowing dough strips handled by the first row of winding tools and the first row of robot arm to pass the second row of winding tools and the second row of robot arms by passing in between or next to the winding tools and robot arms of the second rows.

The embodiment is particularly, but not exclusively, advantageous for providing a system, wherein simultaneous handling processes of twisted bakery buns are provided and wherein the buns handled in a first row of tools and robots can pass the second rows ahead of the buns in the same system, thereby optimizing the number of buns that can be processes simultaneously.

In one embodiment of the invention, the system is adapted to handle at least six twisted buns simultaneously, the system comprising:
- at least six winding tools and at least six robot arms,
- preferably in two rows of winding tool, a first and a second, and two rows of robot arm, a first and a second.

The embodiment is particularly, but not exclusively, advantageous for optimizing the number of buns that can be processes simultaneously.

It should be understood that within the invention, more than six buns may be handled simultaneously. The number of six buns is a preferred number of buns being handled concurrently.

Also, potentially less than six buns may be handled simultaneously in the system.

In one embodiment of the invention, the winding tool comprises a surface for releasing the winded dough strip from the winding tool, said surface being positioned above the protrusions of the winding tool, and preferably:
- wherein the surface is movable in a vertical up and down direction and/or
- wherein the protrusions are movable in a vertical up down direction.

The embodiment is particularly, but not exclusively, advantageous for providing a simple and easy system for releasing the twisted buns from the tool and down to the belt, without the need of any further tool, but only with an implemented function of the winding tool.

Within the invention, it should be understood that the releasing of the dough from the winding tool can be performed either by the surface moving down towards the dough or by the protrusions moving up towards the surface.

In a second aspect, the invention further relates to a method of automated production of twisted bakery buns, wherein said method comprises the steps of:
- transporting the at least one dough strip (DS) at a conveyor belt (400),
- winding by a winding tool (300) and a robot arm (200) the at least one dough strip, wherein the winding process comprises:
   - grasping a first end of the dough strip (DS) by a winding tool (300),
   - lifting the first end of the grasped dough strip (DS) by a winding tool (300),
   - grasping by the robot arm (200) the opposite second end of the dough strip (DS),
   - lifting the entire dough strip (DS) up from the conveyor belt (400) by the winding tool (300) and the robot arm (200),
   - rotating the winding tool (300) around an at least substantially vertical axis,
   - twisting the dough strips by the robot arm (200), preferably simultaneously with rotating the dough strip,
   - winding the second end over and/or under the dough,
   - stopping the rotation of the winding tool (300),
   - releasing the winded dough strip from the winding tool (300),
   - ensuring the winded dough strip lands on a conveyor belt (400),
   - putting the second end of the dough strip (DS) into the center of the winded dough or under the winded dough by the robot arm (200), preferably simultaneously with the winded dough being transported on the conveyor belt (400),
wherein the steps of the method can be executed in any order and/or executed simultaneously.

The second aspect of the invention is particularly, but not exclusively, advantageous for providing a production process/method suitable for performing the complicated processes of making twisted bakery buns in an automated process. Since more or less no manual workforce is required during the process, it obtains an optimal and highly effective automated process.

Instead of having a manual process being inefficient, time consuming and expensive, this process obtains an improved automated process.

In one embodiment of the invention, the method further comprises the step of:
- distributing at least one dough strip at a distributing belt,
wherein the distributing belt and conveyor belt can be two individual belts or one coherent belt.

The embodiment is particularly, but not exclusively, advantageous for providing the possibility of distributing the strips of doughs to be used for making twisted bakery buns in continuation of the same system as where the strips are being made into twisted buns.

In one embodiment of the invention, the method further comprises the step of:
- cutting with a first cutter dough in a lengthwise direction into at least one dough strip,
wherein said first cutter preferably is being a cutting wheel.

The embodiment is particularly, but not exclusively, advantageous for providing an even further automated process. The cutting process is made exact and precise in a quick and easy automated manner.

In one embodiment of the invention, the method further comprises the step of:
- cutting with a second cutter at least one dough strip in a crosswise direction into a plurality of dough strips,
wherein said second cutter preferably is being a guillotine cutter.

The embodiment is particularly, but not exclusively, advantageous for providing an even further automated process. The cutting process is made exact and precise in a quick and easy automated manner.

In one embodiment of the invention, the method further comprises the step of:
- spreading out the dough strips, preferably by the distributing belt.

The embodiment is particularly, but not exclusively, advantageous for providing an even further automated process.

In one embodiment of the invention, the method is performed concurrently by six winding tools and six robot arms.

The embodiment is particularly, but not exclusively, advantageous for providing a process, wherein multiple - as many as possible - twisted bakery buns can be processes simultaneously.

In one embodiment of the invention, the releasing of the winded dough strip from the winding tool is performed by pushing down the winded dough strip from the protrusions of the winding tool,
preferably by a surface of the winding tool being positioned above the protrusions,
- wherein the surface is movable in a vertical up and down direction and/or
- wherein the protrusions are movable in a vertical up down direction.

The embodiment is particularly, but not exclusively, advantageous for providing an simple and easy production method for releasing the twisted buns from the tool and down to the belt without the need of any further tool, but only with an implemented function the winding tool.

Within the invention, it should be understood that the releasing of the dough from the winding tool can be performed either by the surface moving down towards the dough or by the protrusions moving up towards the surface.

In one embodiment of the invention, the twisting and the rotating of the dough strips are executed simultaneously.

The embodiment is particularly, but not exclusively, advantageous for providing a time optimized process.

In one embodiment of the invention, the dough strips are twisted around themselves between 6-12 times, preferably between 7-11 times, more preferably 8-10 times, most preferably 9 times.

The embodiment is particularly, but not exclusively, advantageous for providing a perfectly twisted bakery bun.

In one embodiment of the invention, the the dough strips are rotated around the protrusions between 1-3 times, preferably 2 times.

The embodiment is particularly, but not exclusively, advantageous for providing a perfectly rotated bakery bun.

In a third aspect, the invention further relates to a computer program comprising instructions which, when the program is executed by a computer, cause the computer to carry out at least one or more steps of the method of the second aspect.

The first, second and third aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Figure 1a illustrates an example of dough made into a twisted bakery bun.
Figure 1b illustrates an example of a baked twisted bakery bun.
Figure 2 illustrates a cross-section of the system for automated production of bakery.
Figure 3 illustrates an upper view of the system for automated production of bakery.
Figure 4 illustrates a 3D drawing of the system for automated production of bakery.
Figure 5a illustrates an embodiment of a winding tool with protrusions.
Figure 5b illustrates an embodiment of a winding tool with a movable surface.

### DETAILED DESCRIPTION OF THE INVENTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises", "comprising", "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

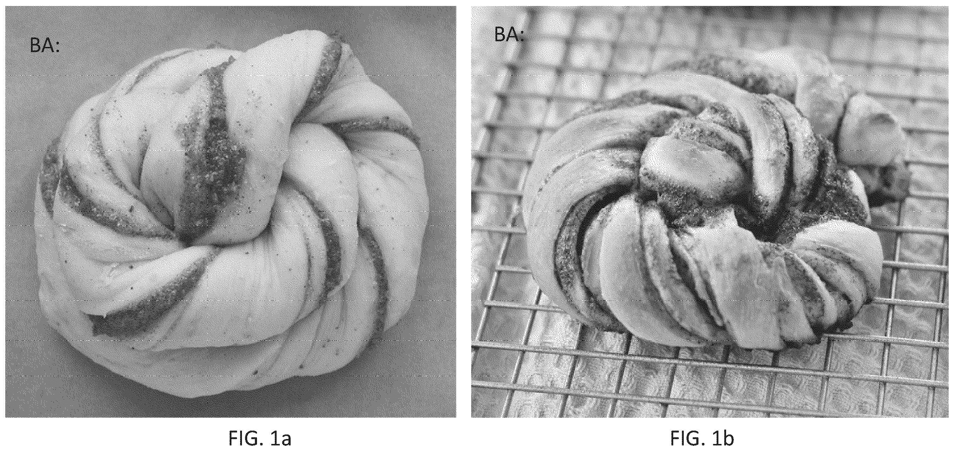

FIG. 1a illustrates an example of bakery product BA according to the invention. The FIG. 1a illustrates a dough strip made into a twisted bakery bun.

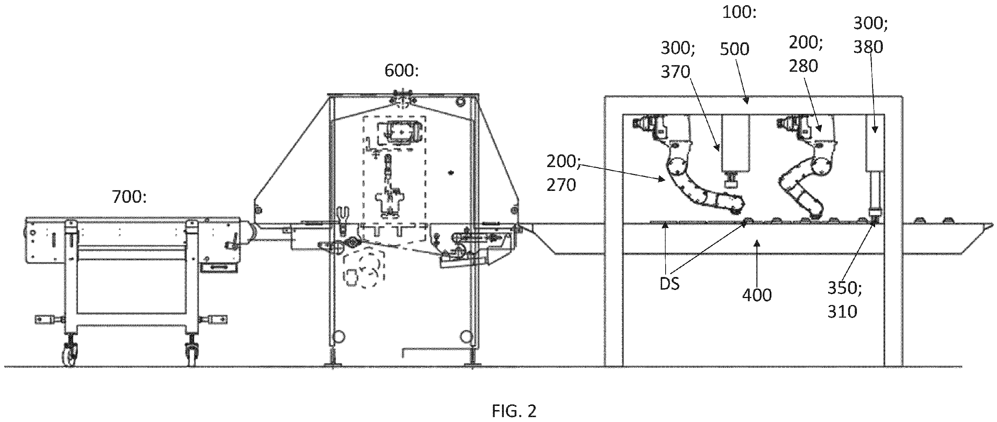

The illustrated twisted bakery bun BA is made from a dough strip DS being rotated and twisted in a system 100 (see FIG. 2, 3 and 4) and by a method according to the invention.

It should be understood that the exact form, shape and size of a "twisted bun" should not be seen as limiting to the invention. FIG. 1 may be seen as a preferred embodiment of a twisted bakery bun.

FIG. 1b illustrates an example of a twisted bakery bun BA being baked.

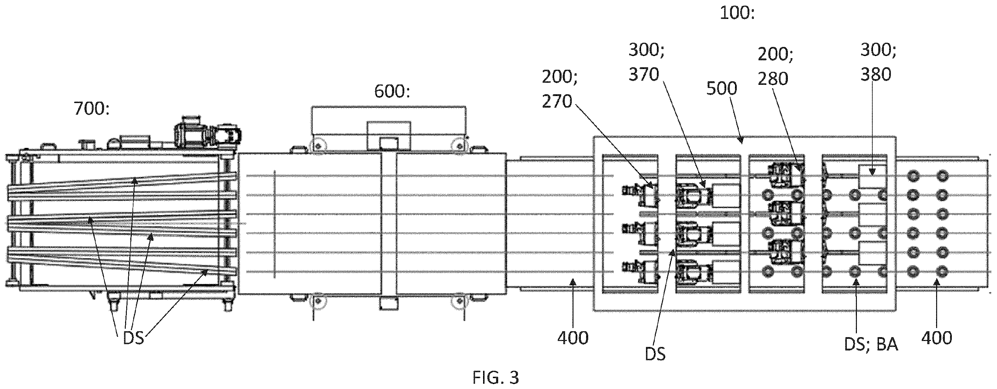

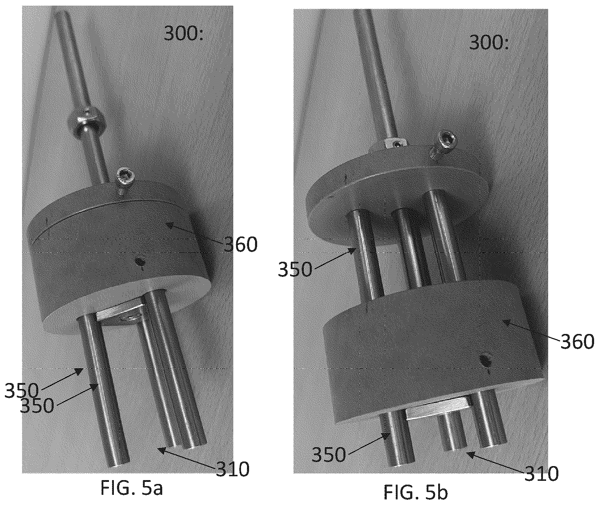

FIG. 2 and FIG. 3 illustrate a system 100 for automated production of bakery BA, said system comprising:
- A robot arm 200 adapted for gripping and twisting the dough strips DS,
- A winding tool 300 for holding and/or winding the dough strips DS, said winding tool 300 comprising:
   - at least two protrusions 350, preferably three protrusions, such as rods, for holding the dough strip DS, said protrusions 350 (see FIG. 5a-b) being positioned in a first end 310 of the winding tool 300,
   wherein the winding tool 300 is being adapted for:
   - rotating around the center axis of the tool, preferably in an at least substantial vertical line, while rolling up the dough strip DS, and
   - release the dough from the winding tool 300, when the dough strip DS is rolled up on the winding tool 300,
- A conveyor belt 400 for transporting the dough strips DS to and from the winding tool 300 and the robot arm 200, said conveyor belt 400 positioned below the winding tool 300 and the robot arm 200, and
- A frame 500, wherefrom the robot arms (200) and the winding tools (300) are suspended from. In FIG. 2 and 3, one frame is illustrated, wherefrom both the winding tool and the robot arms are suspended. Within the invention more frames may be provided.

Additionally, FIG. 2 and 3 illustrate a disperse belt 700 for dispersing associated dough strips DS.

Within the invention the disperse belt 700 and conveyor belt 400 can be two individual belts or one coherent belt. In FIG. 2 and 3, the disperse belt 700 and the conveyor belt 400 are two individual belts separated of a further third belt of a cutter station 600 with a second cutter 600. The belts are made in an arrangement being in continuation of each other.

Furthermore, FIG. 2 and FIG. 3 illustrate a system comprising a frame 500, wherein:
- At least one winding tool 300 is suspended from said frame 500, preferably in an at least substantially vertical direction.
- At least one robot arm 200 is suspended from said frame 500, preferably in an at least substantially vertical direction.

The system illustrated is adapted to handle at least six twisted buns at the same time, since the system comprises:
- six winding tools 300 and six robot arms 200 arranged in two rows 370; 380 of winding tools 300 and two rows 270; 280 of robot arms 200.

Moreover, FIG. 2 and 3 illustrate a system 100 with a first row 370 of winding tools 300 and a first row 270 of robot arms 200 being positioned at least substantially parallel to a second row 380 of winding tools 300 and a second row 280 of robot arms 200.

The first row 370 of winding tools 300 and the first row 270 of robot arms 200 are positioned displaced to the second row 380 of winding tools 300 and the second row 280 of robot arms 200.

The displaced position of rows is adapted for allowing dough strips DS handled by the first row 370 of winding tools 300 and the first row 270 of robot arm 200 to pass the second row 380 of winding tools 300 and the second row 280 of robot arms 200 by passing in between or next to the winding tools 300 and robot arms 200 of the second rows 280; 380.

Also, FIG. 2 and 3 illustrate a system 100 further comprising:
- a second cutter 600, such as a guillotine cutter, for cutting a dough strip DS into a plurality of smaller dough strips,
   wherein the second cutter 600 is adapted to cut the dough strips DS in a crosswise direction.

Within the invention, there may also be a first cutter, such as a cutting wheel, for cutting up dough into dough strips, wherein the first cutter is adapted to cut the dough in a lengthwise direction (not shown).

It should be understood that the system preferably also comprises a safeguard arrangement, such as a barrier (not shown).

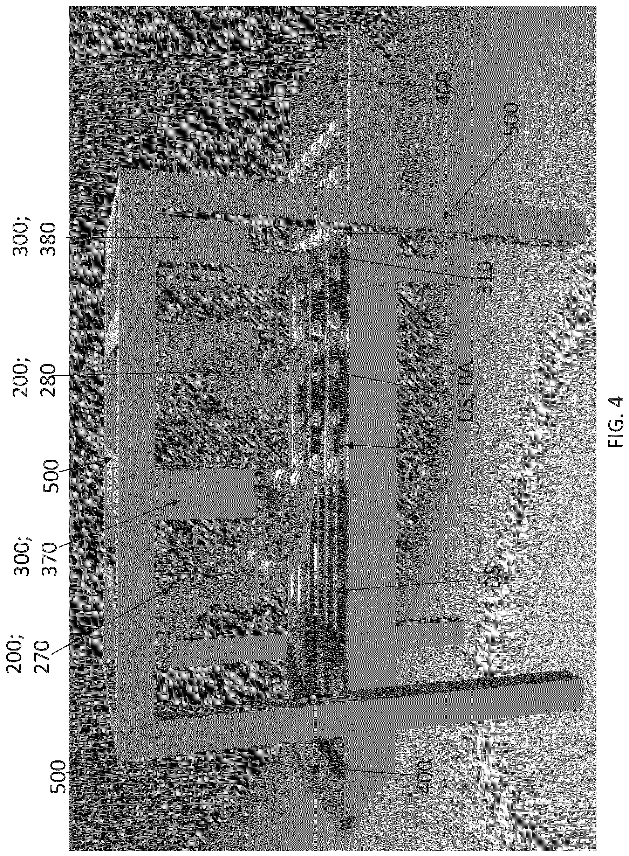

FIG. 4 illustrates a 3D drawing of the system 100 for automated production of bakery BA, such as twisted buns. The system 100 illustrated is adapted for performing a method for automated production of twisted bakery buns BA, wherein said method comprises the steps of:
- transporting the at least one dough strip DS at a conveyor belt 400,
- winding by a winding tool 300 and a robot arm 200 the at least one dough strip, wherein the winding process comprises:
   - grasping a first end of the dough strip DS by a winding tool 300,
   - lifting the first end of the grasped dough strip DS by a winding tool 300,
   - grasping by the robot arm 200 the opposite second end of the dough strip DS,
   - lifting the entire dough strip DS up from the conveyor belt 400 by the winding tool 300 and the robot arm 200,
   - rotating the winding tool 300 around an at least substantially vertical axis,
   - twisting the dough strips by the robot arm 200, preferably simultaneously with rotating the dough strip,
   - winding the second end over and/or under the dough,
- stopping the rotation of the winding tool 300,
- releasing the winded dough strip from the winding tool 300,
- ensuring the winded dough strip lands on a conveyor belt 400,
- putting the second end of the dough strip DS into the center of the winded dough or under the winded dough by the robot arm 200, preferably simultaneously with the winded dough being transported on the conveyor belt 400,
wherein the steps of the method can be executed in any order and/or executed simultaneously.

And if more dough strips DS are to be processed, the above process is repeated.

FIG. 5a and FIG. 5b illustrate an embodiment of a winding tool 300 with protrusions 350. The winding tool 300 is adapted for holding and winding dough strips DS, said winding tool 300 comprising:
- at least two protrusions 350, preferably three protrusions as illustrated, such as rods, said protrusion being positioned in a first end 310 of the winding tool 300,
wherein the winding tool 300 is being adapted for:
- rotating around the center axis of the tool 300, preferably in an at least substantially vertical line, while rolling up the dough strip DS, and
- releasing the dough strip DS from the winding tool 300, when the dough strip is rolled up on the tool.

The releasing of the winded dough strip DS from the winding tool 300 may be performed by pushing down the winded dough strip DS from the protrusions 350 of the winding tool 300, preferably by a surface 360 of the winding tool 300 being positioned above the protrusions 350,
- wherein the surface 360 is movable in a vertical up and down direction as illustrated in FIG. 5b and/or
- wherein the protrusions 350 are movable in a vertical up down direction (not shown).

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims may possibly be advantageously combined, and the mentioning of these features in different claims does not exclude that a combination of features is possible and advantageous.

## Claims

1. A **system** (100) for automated production of bakery (BA), such as twisted buns, said system comprising:
- a robot arm (200) adapted for gripping and twisting the dough strips (DS),
- a winding tool (300) for holding and/or winding the dough strips (DS), said winding tool (300) comprising:
- at least two protrusions (350), such as rods, for holding the dough strips (DS), said protrusion being positioned in an end (310) of the winding tool,
- a conveyor belt (400), said conveyor belt being positioned below the winding tool (300) and the robot arm (200), and
wherein a first row (370) of a plurality of winding tools (300) and a first row (270) of a plurality of robot arms (200) are positioned at least substantially parallel to a second row (380) of a plurality of winding tools (300) and a second row (280) of a plurality of robot arms (200), and
wherein the first row (370) of winding tools (300) and the first row (270) of robot arms (200) are positioned displaced to the second row (380) of winding tools (300) and the second row (280) of robot arms (200), and
wherein the displaced position of rows is adapted for allowing dough strips (DS) handled by the first row (370) of winding tools (300) and the first row (270) of robot arms (200) to pass the second row (380) of winding tools (300) and the second row (280) of robot arms (200) by passing in between or next to the winding tools (300) and robot arms (200) of the second rows (280; 380)..

2. A system (100) according to claim 1, wherein the system further comprises:
- a first cutter, such as a cutting wheel, for cutting up dough into dough strips (DS),
wherein the first cutter is adapted to cut the dough in a lengthwise direction, and/or
- a second cutter (600), such as a guillotine cutter, for cutting a dough strip into a plurality of smaller dough strips (DS),
wherein the second cutter (600) is adapted to cut the dough strips (DS) in a crosswise direction.

3. A system (100) according to any of the preceding claims, wherein the system further comprises a frame (500) for suspending the robot arm (200) and/or the winding tool (300) from the frame (500).

4. A system (100) according to claim 3, wherein the system further comprises at least one frame (500), wherein:
- the at least one winding tool (300) is suspended from said frame (500), and/or
- the at least one robot arm (200) is suspended from said frame (500).

5. A system (100) according to any of the preceding claims, wherein the system further comprises:
- a disperse belt (700) for dispersing associated dough strips (DS),
wherein the disperse belt (700) and conveyor belt (400) is two individual belts or one coherent belt.

6. A system (100) according to any of the preceding claims,
wherein the winding tool (300) is being adapted for, when in use:
- rotating around the center axis of the winding tool (300), in an at least substantially vertical line, while rolling up the dough strip, and
- releasing the dough strip from the winding tool, when the dough strip is rolled up on the tool,

7. A system (100) according to any of the preceding claims, wherein the system is adapted to handle at least six dough strips (DS) simultaneously, the system comprising:
- at least six winding tools (300) and at least six robot arms (200).

8. A system (100) according to any of the preceding claims, wherein the system (100) is adapted to perform the method of claim 9-14.

9. A method for automated production of bakery, such as twisted buns , wherein said method comprises the steps of:
- transporting the at least one dough strip (DS) at a conveyor belt (400),
- winding by a winding tool (300) and a robot arm (200) the at least one dough strip, wherein the winding process comprises:
- grasping a first end of the dough strip (DS) by a winding tool (300),
- lifting the first end of the grasped dough strip (DS) by a winding tool (300),
- grasping by the robot arm (200) the opposite second end of the dough strip (DS),
- lifting the entire dough strip (DS) up from the conveyor belt (400) by the winding tool (300) and the robot arm (200),
- rotating the winding tool (300) around an at least substantially vertical axis,
- twisting the dough strips by the robot arm (200), optionally simultaneously with rotating the dough strip,
- winding the second end over and/or under the dough,
- stopping the rotation of the winding tool (300),
- releasing the winded dough strip from the winding tool (300),
- ensuring the winded dough strip lands on a conveyor belt (400),
- putting the second end of the dough strip (DS) into the center of the winded dough or under the winded dough by the robot arm (200), optionally simultaneously with the winded dough being transported on the conveyor belt (400),
wherein the steps of the method may be executed in any order and/or executed simultaneously, and
wherein the releasing of the winded dough strip (DS) from the winding tool (300) is performed by pushing down the winded dough strip from protrusions (350) of the winding tool (300),
by a surface (360) of the winding tool (300) being positioned above the protrusions (350),
- wherein the surface (360) is movable in a vertical up and down direction and/or
- wherein the protrusions (350) are movable in a vertical up down direction.

10. A method according to claim 9, wherein the method further comprises the step of:
- cutting with a first cutter dough in a lengthwise direction into at least one dough strip (DS).

11. A method according to claim 9-10, wherein the method further comprises the step of:
- cutting with a second cutter (600) at least one dough strip (DS) in a crosswise direction into a plurality of dough strip (DS).

12. A method according to claim 9-11, wherein method further comprises the step of:
- spreading out the dough strips (DS).

13. A method according to claim 9-12, wherein the method is performed simultaneously by six winding tools (300) and six robot arms (200).

14. A method according to claim 9-13, wherein the twisting and the rotating of the dough strips are executed simultaneously.

## Patentansprüche

1. **System** (100) zur automatisierten Herstellung von Backwaren (BA), wie zum Beispiel gedrehten Brötchen, wobei das System umfasst:
- einen Roboterarm (200), der zum Ergreifen und Verdrehen der Teigstreifen (DS) ausgelegt ist,
- ein Wickelwerkzeug (300) zum Halten und/oder Aufwickeln der Teigstreifen (DS), wobei das Wickelwerkzeug (300) umfasst:
- mindestens zwei Vorsprünge (350), wie zum Beispiel Stäbe, zum Halten der Teigstreifen (DS), wobei der Vorsprung an einem Ende (310) des Wickelwerkzeugs positioniert ist,
- ein Förderband (400), wobei das Förderband unterhalb des Wickelwerkzeugs (300) und des Roboterarms (200) positioniert ist, und
wobei eine erste Reihe (370) einer Vielzahl von Wickelwerkzeugen (300) und eine erste Reihe (270) einer Vielzahl von Roboterarmen (200) mindestens im Wesentlichen parallel zu einer zweiten Reihe (380) einer Vielzahl von Wickelwerkzeugen (300) und einer zweiten Reihe (280) einer Vielzahl von Roboterarmen (200) positioniert sind, und
wobei die erste Reihe (370) der Wickelwerkzeuge (300) und die erste Reihe (270) der Roboterarme (200) gegenüber der zweiten Reihe (380) der Wickelwerkzeuge (300) und der zweiten Reihe (280) der Roboterarme (200) versetzt positioniert sind, und
wobei die versetzte Position der Reihen dazu ausgelegt ist, um Teigstreifen (DS), die durch die erste Reihe (370) der Wickelwerkzeuge (300) und die erste Reihe (270) der Roboterarme (200) gehandhabt werden, zu erlauben, die zweite Reihe (380) der Wickelwerkzeuge (300) und die zweite Reihe (280) der Roboterarme (200) zu passieren, durch Passieren zwischen oder neben den Wickelwerkzeugen (300) und Roboterarmen (200) der zweiten Reihen (280; 380).

2. System (100) nach Anspruch 1, wobei das System ferner umfasst:
- ein erstes Schneidwerkzeug, wie zum Beispiel ein Schneidrad, zum Schneiden von Teig in Teigstreifen (DS), wobei das erste Schneidwerkzeug dazu ausgelegt ist, um den Teig in einer Längsrichtung zu schneiden,
und/oder
- ein zweites Schneidwerkzeug (600), wie zum Beispiel einen Guillotineschneider, zum Schneiden eines Teigstreifens in eine Vielzahl von kleineren Teigstreifen (DS),
wobei das zweite Schneidwerkzeug (600) dazu ausgelegt ist, um die Teigstreifen (DS) in einer Querrichtung zu schneiden.

3. System (100) nach einem der vorhergehenden Ansprüche, wobei das System ferner einen Rahmen (500) zum Aufhängen des Roboterarms (200) und/oder des Wickelwerkzeugs (300) an dem Rahmen (500) umfasst.

4. System (100) nach Anspruch 3, wobei das System ferner mindestens einen Rahmen (500) umfasst, wobei:
- das mindestens ein Wickelwerkzeug (300) an dem Rahmen (500) aufgehängt ist, und/oder
- der mindestens eine Roboterarm (200) an dem Rahmen (500) aufgehängt ist.

5. System (100) nach einem der vorhergehenden Ansprüche, wobei das System ferner umfasst:
- ein Verteilband (700) zum Verteilen zusammengehöriger Teigstreifen (DS),
wobei das Verteilband (700) und das Förderband (400) zwei einzelne Bänder oder ein zusammenhängendes Band ist.

6. System (100) nach einem der vorhergehenden Ansprüche,
wobei das Wickelwerkzeug (300), wenn in Gebrauch, dazu ausgelegt ist zum:
- Drehen um die Mittelachse des Wickelwerkzeugs (300) in einer mindestens im Wesentlichen vertikalen Linie während des Aufrollens des Teigstreifens, und
- Freigeben des Teigstreifens von dem Wickelwerkzeug, wenn der Teigstreifen auf dem Werkzeug aufgerollt ist.

7. System (100) nach einem der vorhergehenden Ansprüche, wobei das System dazu ausgelegt ist, mindestens sechs Teigstreifen (DS) gleichzeitig zu handhaben, wobei das System umfasst:
- mindestens sechs Wickelwerkzeuge (300) und mindestens sechs Roboterarme (200).

8. System (100) nach einem der vorhergehenden Ansprüche, wobei das System (100) dazu ausgelegt ist, das Verfahren nach Anspruch 9-14 durchzuführen.

9. **Verfahren zur** automatisierten Herstellung von Backwaren, wie zum Beispiel gedrehten Brötchen, wobei das Verfahren die Schritte umfasst:
- Transportieren des mindestens einen Teigstreifens (DS) auf einem Förderband (400),
- Aufwickeln des mindestens einen Teigstreifens durch ein Wickelwerkzeug (300) und einen Roboterarm (200), wobei der Aufwickelvorgang umfasst:
- Ergreifen eines ersten Endes des Teigstreifens (DS) durch ein Wickelwerkzeug (300),
- Anheben des ersten Endes des ergriffenen Teigstreifens (DS) durch ein Wickelwerkzeug (300),
- Ergreifen des gegenüberliegenden zweiten Endes des Teigstreifens (DS) durch den Roboterarm (200),
- Anheben des gesamten Teigstreifens (DS) von dem Förderband (400) durch das Wickelwerkzeug (300) und den Roboterarm (200),
- Drehen des Wickelwerkzeugs (300) um eine mindestens im Wesentlichen vertikale Achse,
- Verdrehen der Teigstreifen durch den Roboterarm (200), optional gleichzeitig mit dem Drehen des Teigstreifens,
- Aufwickeln des zweiten Endes über und/oder unter den Teig,
- Anhalten der Drehung des Wickelwerkzeugs (300),
- Freigeben des aufgewickelten Teigstreifens von dem Wickelwerkzeug (300),
- Sicherstellen, dass der aufgewickelte Teigstreifen auf einem Förderband (400) landet,
- Legen des zweiten Endes des Teigstreifens (DS) in die Mitte des aufgewickelten Teigs oder unter den aufgewickelten Teig durch den Roboterarm (200), optional gleichzeitig mit dem Transportieren des aufgewickelten Teigs auf dem Förderband (400),
wobei die Schritte des Verfahrens in beliebiger Reihenfolge ausgeführt und/oder gleichzeitig ausgeführt werden können, und wobei das Freigeben des aufgewickelten Teigstreifens (DS) von dem Wickelwerkzeug (300) durch Herunterdrücken des aufgewickelten Teigstreifens von Vorsprüngen (350) des Wickelwerkzeugs (300) durchgeführt wird,
durch eine Oberfläche (360) des Wickelwerkzeugs (300), die über den Vorsprüngen (350) positioniert ist,
- wobei die Oberfläche (360) in einer vertikalen Aufwärts- und Abwärtsrichtung beweglich ist und/oder
- wobei die Vorsprünge (350) in einer vertikalen Aufwärts- und Abwärtsrichtung beweglich sind.

10. Verfahren nach Anspruch 9, wobei das Verfahren ferner den Schritt umfasst:
- Schneiden von Teig mit einem ersten Schneidwerkzeug in einer Längsrichtung in mindestens einen Teigstreifen (DS).

11. Verfahren nach Anspruch 9-10, wobei das Verfahren ferner den Schritt umfasst:
- Schneiden von mindestens einem Teigstreifen (DS) mit einem zweiten Schneidwerkzeug (600) in einer Querrichtung in eine Vielzahl von Teigstreifen (DS).

12. Verfahren nach Anspruch 9-11, wobei das Verfahren ferner den Schritt umfasst:
- Ausbreiten der Teigstreifen (DS).

13. Verfahren nach Anspruch 9-12, wobei das Verfahren durch sechs Wickelwerkzeuge (300) und sechs Roboterarme (200) gleichzeitig durchgeführt wird.

14. Verfahren nach Anspruch 9-13, wobei das Verdrehen und das Drehen der Teigstreifen gleichzeitig ausgeführt wird.

## Revendications

1. **Système** (100) pour la production automatisée de produits de boulangerie (BA), tels que des petits pains torsadés, ledit système comprenant :
- un bras de robot (200) adapté pour saisir et tordre les bandes de pâte (DS),
- un outil d'enroulement (300) pour maintenir et/ou enrouler les bandes de pâte (DS), ledit outil d'enroulement (300) comprenant :
- au moins deux saillies (350), telles que des tiges, pour maintenir les bandes de pâte (DS), ladite saillie étant positionnée dans une extrémité (310) de l'outil d'enroulement,
- une courroie transporteuse (400), ladite courroie transporteuse étant positionnée sous l'outil d'enroulement (300) et le bras de robot (200), et
dans lequel une première rangée (370) d'une pluralité d'outils d'enroulement (300) et une première rangée (270) d'une pluralité de bras de robot (200) sont positionnées au moins sensiblement parallèlement à une seconde rangée (380) d'une pluralité d'outils d'enroulement (300) et à une seconde rangée (280) d'une pluralité de bras de robot (200), et
dans lequel la première rangée (370) d'outils d'enroulement (300) et la première rangée (270) de bras de robot (200) sont positionnées déplacées par rapport à la seconde rangée (380) d'outils d'enroulement (300) et à la seconde rangée (280) de bras de robot (200), et
dans lequel la position déplacée des rangées est adaptée pour permettre aux bandes de pâte (DS) manipulées par la première rangée (370) d'outils d'enroulement (300) et la première rangée (270) de bras de robot (200) de passer la seconde rangée (380) d'outils d'enroulement (300) et la seconde rangée (280) de bras de robot (200) en passant entre ou à côté des outils d'enroulement (300) et des bras de robot (200) des secondes rangées (280 ; 380).

2. Système (100) selon la revendication 1, dans lequel le système comprend en outre :
- un premier outil de découpe, tel qu'une roue à découper, pour découper la pâte en bandes de pâte (DS), dans lequel le premier outil de découpe est adapté pour découper la pâte dans le sens de la longueur,
et/ou
- un second outil de découpe (600), tel qu'un outil de découpe à guillotine, pour découper une bande de pâte en une pluralité de bandes de pâte (DS) plus petites,
dans lequel le second outil de découpe (600) est adapté pour découper les bandes de pâte (DS) dans une direction transversale.

3. Système (100) selon l'une quelconque des revendications précédentes, dans lequel le système comprend en outre un cadre (500) pour suspendre le bras de robot (200) et/ou l'outil d'enroulement (300) du cadre (500).

4. Système (100) selon la revendication 3, dans lequel le système comprend en outre au moins un cadre (500), dans lequel :
- l'au moins un outil d'enroulement (300) est suspendu à partir dudit cadre (500), et/ou
- l'au moins un bras de robot (200) est suspendu à partir dudit cadre (500).

5. Système (100) selon l'une quelconque des revendications précédentes, dans lequel le système comprend en outre :
- une courroie de dispersion (700) pour disperser des bandes de pâte (DS) associées,
dans lequel la courroie de dispersion (700) et la courroie transporteuse (400) sont deux courroies individuelles ou une courroie cohérente.

6. Système (100) selon l'une quelconque des revendications précédentes,
dans lequel l'outil d'enroulement (300) est adapté pour, lors de son utilisation :
- entrer en rotation autour de l'axe central de l'outil d'enroulement (300), selon une ligne au moins sensiblement verticale, tout en enroulant la bande de pâte, et
- libérer la bande de pâte de l'outil d'enroulement, lorsque la bande de pâte est enroulée sur l'outil.

7. Système (100) selon l'une quelconque des revendications précédentes, dans lequel le système est adapté pour manipuler simultanément au moins six bandes de pâte (DS), le système comprenant :
- au moins six outils d'enroulement (300) et au moins six bras de robot (200).

8. Système (100) selon l'une quelconque des revendications précédentes, dans lequel le système (100) est adapté pour réaliser le procédé selon la revendication 9 à 14.

9. **Procédé pour** la production automatisée de produits de boulangerie, tels que des petits pains torsadés, dans lequel ledit procédé comprend les étapes consistant à :
- transporter l'au moins une bande de pâte (DS) sur une courroie transporteuse (400),
- enrouler, à l'aide d'un outil d'enroulement (300) et d'un bras de robot (200), l'au moins une bande de pâte, dans lequel le processus d'enroulement comprend :
- la saisie d'une première extrémité de la bande de pâte (DS) à l'aide d'un outil d'enroulement (300),
- le levage de la première extrémité de la bande de pâte (DS) saisie à l'aide d'un outil d'enroulement (300),
- la saisie par le bras de robot (200) de la seconde extrémité opposée de la bande de pâte (DS),
- le levage de la bande de pâte (DS) entière de la courroie transporteuse (400) à l'aide de l'outil d'enroulement (300) et du bras de robot (200),
- la rotation de l'outil d'enroulement (300) autour d'un axe au moins sensiblement vertical,
- la torsion des bandes de pâte à l'aide du bras de robot (200), éventuellement simultanément à la rotation de la bande de pâte,
- l'enroulement de la seconde extrémité sur et/ou sous la pâte,
- l'arrêt de la rotation de l'outil d'enroulement (300),
- la libération de la bande de pâte enroulée de l'outil d'enroulement (300),
- l'assurance que la bande de pâte enroulée atterrit sur une courroie transporteuse (400),
- le positionnement de la seconde extrémité de la bande de pâte (DS) au centre de la pâte enroulée ou sous la pâte enroulée à l'aide du bras de robot (200), éventuellement simultanément avec le transport de la pâte enroulée sur la courroie transporteuse (400),
dans lequel les étapes du procédé peuvent être exécutées dans un quelconque ordre et/ou exécutées simultanément, et
dans lequel la libération de la bande de pâte (DS) enroulée de l'outil d'enroulement (300) est réalisée en poussant la bande de pâte enroulée vers le bas à partir des saillies (350) de l'outil d'enroulement (300),
à l'aide d'une surface (360) de l'outil d'enroulement (300) positionnée au-dessus des saillies (350),
- dans lequel la surface (360) est mobile dans une direction verticale vers le haut et vers le bas et/ou
- dans lequel les saillies (350) sont mobiles dans une direction verticale de haut en bas.

10. Procédé selon la revendication 9, dans lequel le procédé comprend en outre l'étape consistant à :
- découper la pâte dans le sens de la longueur à l'aide d'un premier outil de découpe, en au moins une bande de pâte (DS).

11. Procédé selon la revendication 9 à 10, dans lequel le procédé comprend en outre l'étape consistant à :
- découper avec un second outil de découpe (600) au moins une bande de pâte (DS) dans une direction transversale en une pluralité de bandes de pâte (DS).

12. Procédé selon la revendication 9 à 11, dans lequel le procédé comprend en outre l'étape consistant à :
- étaler les bandes de pâte (DS).

13. Procédé selon la revendication 9 à 12, dans lequel le procédé est réalisé simultanément à l'aide de six outils d'enroulement (300) et de six bras de robot (200).

14. Procédé selon la revendication 9 à 13, dans lequel la torsion et la rotation des bandes de pâte sont exécutées simultanément.
